# EUROPEAN PATENT SPECIFICATION

(11) **EP 2 095 716 B1**
(45) Date of publication and mention of the grant of the patent: **25.05.2011**
(21) Application number: 08151623.9
(22) Date of filing: 19.02.2008
(51) Int. Cl.: A23C 9/00, A23L 1/00, A23L 1/2165, A23L 1/40, A23L 2/39, B65D 85/816, A23G 1/56

(54) **Culinary capsule**
Nahrungsmittelkapsel
Capsule culinaire

(43) Date of publication of application: 02.09.2009
(73) Proprietor: Nestec S.A., 1800 Vevey (CH)
(72) Inventor: Graf, Björn, 78462 Konstanz (DE); Hartmann, Markus, 78315 Radolfzell (DE); Chng, Doris, 54800 Kuala Lumpur (MY); Duboc, Philippe, 3007 Berne (CH)

(56) References cited:
- EP-A- 1 046 346
- EP-A- 1 574 452
- WO-A-2006/111220
- CH-A- 550 553
- FR-A- 1 289 909
- GB-A- 1 464 429
- US-A- 4 578 274
- US-A1- 2007 259 022

## Description

### Field of the invention

The present invention relates to capsules comprising food ingredients which upon reconstitution with hot liquid using a dispensing system can provide food products such as hot soups, sauces, mashed potatoes, etc. The present invention also relates to the use of said capsules, to a system for the production of an instant food product and to food pellets which may be used in the present capsules.

### Background of the invention

Capsules for dispensing hot and/or cold beverages using a dispensing system are well known in the art. These capsules are known for instance from EP 1 472 156. Dispensing machines and the capsules usable therein are commonly found on the market. The beverages which may be produced by such machines and capsules are generally coffee products, hot chocolates or teas.

The ingredients present in the commercially available cartridges are usually in the form of a powder which either dissolves with the injected liquid (usually hot water), for example, in the case of the preparation of hot chocolate, milk, etc. Alternatively, the powder inside the capsule is extracted with the injected liquid, in the case of coffee. The result is a beverage which has low viscosity.

Savoury beverages which can be prepared using a capsule and a dispensing machine are however less common. A clear Consommé from Knorr which can be dispensed on a Lavazza Blue machine has been made available on the market of culinary products. This is however not a thick, creamy food product.

Instant creamy soup formulations are described in GB 1464429. The agglomerated ingredients include pregelatinised binding agents coated with fat and other ingredients. However, the patent does not address the use of a cartridge-based system to prepare the soup, nor the modifications needed to the powder if said soup is to be prepared from a cartridge-based beverage system.

### Object of the present invention

The present object is thus to provide a way in which beverages or food products with a thicker consistency than traditional beverages may be prepared using a capsule and beverage dispensing machine.

### Summary of the present invention

The present object is solved by means of the independent claims. The dependent claims further develop the central idea of the invention.

Thus, in a first aspect, the present invention provides a capsule comprising a plurality of compacted food pellets comprising a dehydrated food powder mixed in a fat-based binding system.

In a further aspect of the invention, the present invention relates to the use of a capsule according to any of claims 1 to 28 in the preparation of an instant food product.

A method for the production of a capsule according to any of claims 1 to 28, comprising the step of
a. preparing food pellets by mixing dehydrated ingredients with a fat-based binding system and pressing or extruding the mixture to obtain said pellets and
b. Filling a capsule with a plurality of said pellets, also forms part of the present invention.

Furthermore, a system for the production of an instant food product, comprising a machine and a capsule according to any of claims 1 to 28, wherein the machine comprises means to extract said capsule placed in said machine by injecting hot liquid in said capsule, and wherein the capsule comprises means for being extracted by said hot liquid and means for allowing an instant food product to flow out of said capsule, is also provided by the present invention.

Finally, the present invention also relates to a compacted food pellet comprising a dehydrated food powder mixed in a fat-based binding system, wherein the fat-based binding system comprises a mixture of fat, flour, starch and gum. Said article can be in the shape of a pellet, lentil, briquette, pebble, dragee, pillow, egg or ball.

### Figures

The present invention is further described hereinafter by reference to the accompanying figures, wherein:

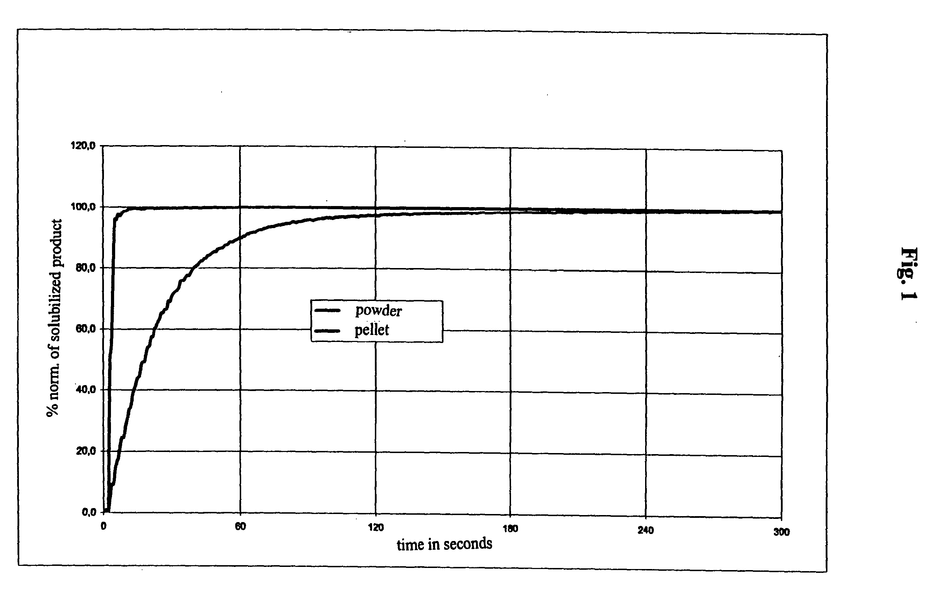

- fig. 1 is a graph comparing dissolution of powders (comprised in traditional capsules) and pellets (contained in the capsules according to the present invention),

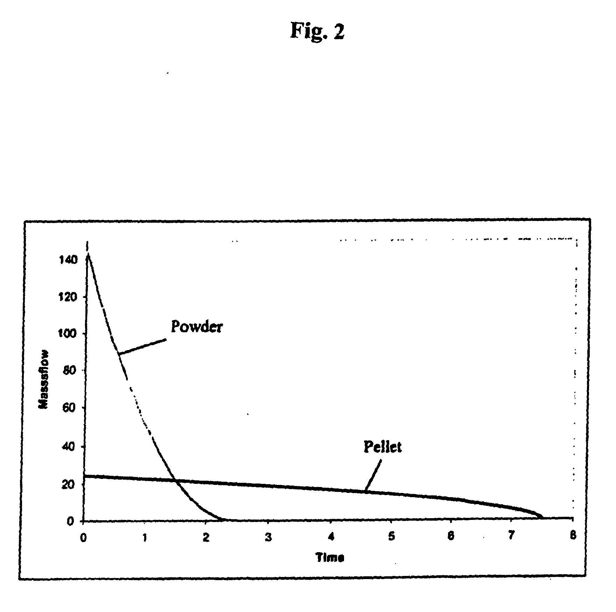

- fig. 2 is a schematic diagram of the mass flow over time of a powder compared to a fat-based pellet as used in the capsules of the invention, and
- fig. 3 is a schematic sectioned view of an example of a capsule.

### Detailed description of the invention

The present invention relates to capsules comprising a plurality of compacted food pellets. The pellets comprise a dehydrated food powder mixed in a fat-based binding system.

The capsules may be of any type which can be used in a beverage dispensing machine. Typical capsules which may be used in the present invention are those described for instance in EP 1 472 156 B1. The capsules therein described are designed to be extracted by injection of a fluid under pressure in an extraction device. Each capsule comprises its own opening means activated by the rise of pressure of the fluid introduced into the capsule at the time of its extraction. Further, the capsule has its own outflow passage with its own ducting means making it possible to avoid or at the very least considerably reduce contact with the elements of the system of the extraction device.

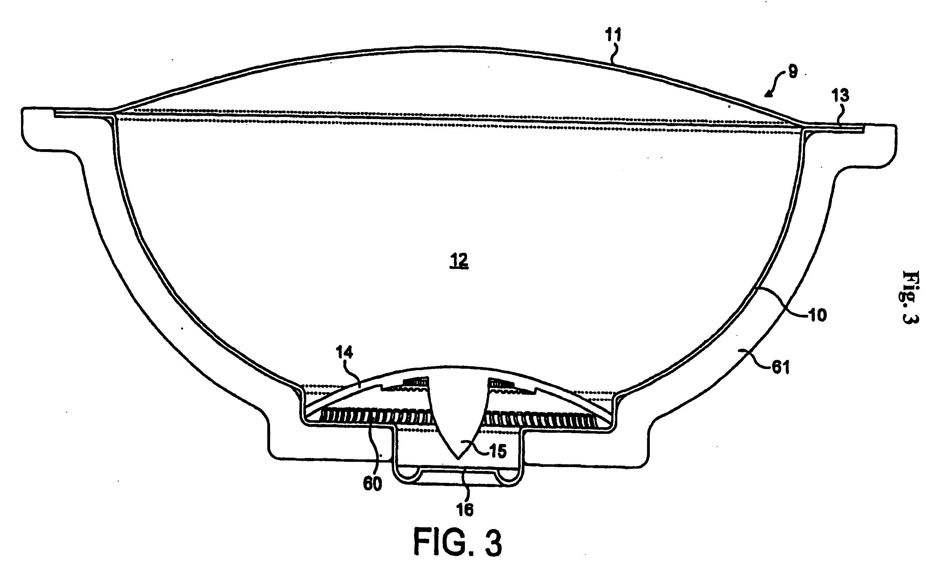

Figure 3 shows an example of a capsule which can be used to incorporate the food ingredients. This capsule comprises a cup (10) and a membrane (11) welded at a peripheral welding edge (13) forming the periphery of the said cup. The capsule contains food ingredients (12). The system for opening the capsule consists of a disc (14) arranged in the bottom of the cup (10) and comprising a puncturing point (15) and a filter (60). The puncturing point is therefore enclosed in the chamber formed by the cup (10) and the membrane (11). The disc is thus arranged at the bottom of the cup and thus forms a wider area over which the internal pressure may be spread during extraction. At the time of extraction, the capsule is introduced into the extraction device, water is introduced via a needle which punctures the membrane (11), and under the effect of the rise in pressure in the capsule, the disc (14) experiences a downward thrust towards the retaining part (16) so that the point (15) punctures the retaining part (16) of the cup, thus allowing the food product to flow out. The capsule is held firmly in place by virtue of the support (61) and the filter (60) prevents remainders from passing into the mug (not depicted) situated under the said capsule.

The capsule of the present invention is preferably a sealed capsule. It is typically designed to be extracted by injection of fluid under pressure in an extraction device. Preferably, the capsule comprises a closed chamber containing the pellets and a means allowing said capsule to be opened at the time of its use and for allowing a beverage or food product to flow out.

The food pellets which are present in the capsule are compacted. Thus, they have a higher density than powders which are normally used in capsules. Typically, the density of the food pellet is between 1.0 to 1.5 g/cm³.

The food article comprises a dehydrated food powder mixed in a fat-based binding system. By "food" is meant any consumable ingredient. Thus, the dehydrated food powder may be any dried ingredient such as those used in soup powders, sauce powders, mashed potato powders, chocolate powder, creamer, milk powder and soluble beverage powders.

The fat-based binding system to which the dehydrated food powder is mixed preferably comprises a mixture of fat, flour, starch and gum. Typically, the binding system comprises 30-40wt% fat, 40-50wt% flour, 10-15wt% starch and 5-10wt% gum.

In a preferred embodiment, the binding system is a mixture of palm fat, wheat flour, potato starch and guar gum. In the case of chocolate based beverage, it is conceivable that the binding system would comprise at least some cocoa butter as the fat component.

Binding systems are normally used to obtain thick creamy soups. They usually comprise modified or non-modified starches, flours or gums.

In the case of capsules however, where space is limited, traditional binding systems do not work efficiently. It was found that the present fat-based binding system overcomes the space limitation by providing enhanced binding properties. The fat-based binding system was particularly advantageous when incorporated in a compacted article comprising the dried ingredients. Indeed, the binding system allows the capsule contents to be homogeneously released from the capsule, while thickening the resulting product when reconstituted with water, without causing blockage during dispensing. Furthermore, using the fat-based binding system as in the present invention allows the dispensing of larger amounts of product from one capsule than when traditional binding systems are used.

The dehydrated food ingredients are embedded in the fat-based binding system. Indeed it was found that the incorporation of the powder into the fat-based binding system and a compaction of the mixture to a food article were particularly advantageous as it provided a homogeneous release of the soup, when using a beverage dispensing machine.

To produce the food articles, the dehydrated food ingredients are mixed with the fat-based binding system and subsequently agglomerated.

The dehydrated ingredients are mixed with the fat-based binding system in a dehydrated ingredients : binding system ratio of 50:50 to 90:10.

The compaction can then be achieved by pressing or extruding the mixture. Pressing is typically carried out with any of flat die pelleting presses, gear-shaped press rollers, punch and die presses, roller presses. Extrusion can typically be carried out with any of screen and basket extruders, radial, axial and dome extruders, flat and ring die extruders, axial screw extruders, hollow perforated cylinders.

The preferred technology used is a flat die pelleting press as it allows controlling the density of the food articles within a wider range compared to the other technologies.

Typically, the food articles are in the form of a pellet, lentil, briquette, pebble, dragee, pillow, egg or ball. Preferably, the food articles have a height dimension of between 1 to 10mm, more preferably 5mm.

It has been found that the surface to volume ratio of the food articles is preferably between 0.9 to 3.5mm⁻¹. More preferably, it is between 0.95-3.33mm⁻¹, even more preferably 1.3 - 2.1 mm⁻¹.

Such surface ratio contributes in obtaining a homogeneous concentration of the soup in a capsule-based system.

Indeed, as soon as a hot liquid, typically water with a temperature of about 85°C is injected into the capsule, the fat starts melting and thus releasing the food product mass, e.g. soup.

If the surface to volume ratio is too high, e.g. higher than 3.5mm⁻¹, the release of the food product mass will be too quick, leading to a non-homogeneous distribution of the product during dispensing. In this case, for instance, the food articles present in the capsule would be dissolved in the first 50mL of liquid flowing out of the capsule. Thus, the surface to volume ratio is preferably below 3.5mm⁻¹.

If, however, the surface to volume ratio is too low, e.g. lower than 0.9mm⁻¹, the melting rate of the fat in the food articles will be too slow and as a consequence product will remain in the capsule after dispensing.

The food articles of the invention preferably comprise fat in an amount of 5-65 wt%, starch in an amount of 1-10 wt%, gum in an amount of 1-5 wt%, flour in an amount of 10-30 wt%. Furthermore, the food articles may comprise any of salt, sugar, flavours, emulsifiers, maltodextrin, whey protein powder, creamer, wheat gluten hydrolysate, or any combinations thereof.

The capsule of the invention typically contains 5 to 15g of food articles. This amount provides a good consistency to a product upon extraction with 100 to 250mL of hot liquid, e.g. hot water.

Thus, the use of the present capsules in the preparation of an instant food product forms part of the present invention.

Typically, the use comprises placing the capsule in a beverage system and allowing the contents of said capsule to be extracted. Preferably, the contents of the capsule are extracted with hot water, more preferably about 100-200mL of hot water.

The instant food product obtained by the use of the present capsules may be a soup, a sauce, mashed potatoes, a hot beverage, e.g. hot chocolate.

The instant food product is characterised by a creamy consistency which varies in thickness depending on the intended product. In any case, the product obtained is creamier and thicker than traditional products obtained using traditional capsules in a dispensing system. Furthermore, no problems of blockage due to the viscosity of the end product are observed. Thus, it is possible with the present invention to provide a broader range of products, which extends beyond the usual beverages such as coffee, tea, hot chocolate to instant food products such as mashed potatoes, sauces for instance.

The present invention also offers the advantage that no further stirring is required since the food product is dispensed in a very homogeneous manner. Furthermore, the single-portioned beverage or food product is convenient for the consumer.

The present method for the production of a capsule according to any of claims 1 to 28, comprises the first step of preparing food articles by mixing dehydrated ingredients with a fat-based binding system and pressing or extruding the mixture to obtain said food articles. The preparation of the food articles may be carried out as described above. In a second step, the capsule is filled with a plurality of said food articles.

A system for the production of an instant food product also falls within the present invention. The system comprises a machine and a capsule as described above. The machine comprises means to extract a capsule placed in said machine by injecting hot liquid in said capsule. The capsule comprises means for being extracted by said hot liquid and means for allowing an instant food product to flow out of said capsule.

In a further aspect of the invention, a compacted food article comprising a dehydrated food powder mixed in a fat-based binding system, wherein the fat-based binding system comprises a mixture of fat, flour, starch and gum is provided. Preferably, the food article has a surface to volume ratio of 0.9mm⁻¹ to 3.5 mm⁻¹.

The present invention is further illustrated hereinafter with the following non-limiting examples.

### Examples

### Example 1

Recipe of a food pellet contained in a capsule for the preparation of an instant soup.

| **Ingredient** | **Amount (wt%)** |
|---|---|
| Fat-based binding system | 40-50% |
| Creamer | 15-20% |
| Maltodextrin | 5-15% |
| Salt | 0.1-10% |
| Whey protein powder | 0.1-5% |
| Sugar | 0.1-2% |
| Wheat gluten hydrolysate | 0.5-5% |
| flavours | 10-20% |

### Fat-based binding system composition

| **Ingredients** | **Amount (wt%)** |
|---|---|
| Wheat flour | 40-50% |
| Potato starch | 10-15% |
| Palm fat | 30-40% |
| Guar gum | 5-10% |

### Example 2

In order to measure the quantity of solubilised product after 10s, pellets of the invention and non-compacted powder were poured into a recipient comprising hot water (80°C).

The measuring equipment was a conductivity meter CDM 22

## Claims

1. A capsule usable in a beverage dispensing machine, the capsule comprising a plurality of compacted food articles comprising a dehydrated food powder mixed in a fat-based binding system, wherein a ratio of the dehydrated food powder:fat-based binding system is between 50:50 to 90:10.

2. The capsule according to claim 1, wherein the food articles have a surface to volume ratio of 0.9 to 3.5mm⁻¹.

3. The capsule according to claim 1 or 2, wherein the surface to volume ratio of the food articles is between 0.9-3.35mm⁻¹, more preferably between 0.95-3.33 mm⁻¹, most preferably between 1.3-2.1 mm⁻¹.

4. The capsule according to any of the preceding claims, wherein the binding system comprises a mixture of fat, flour, starch and gum.

5. The capsule according to any of the preceding claims, wherein the binding system comprises 30-40wt% fat, 40-50wt% flour, 10-15wt% starch and 5-10wt% gum.

6. The capsule according to any of the preceding claims, wherein the binding system comprises a mixture of palm fat, wheat flour, potato starch and guar gum.

7. The capsule according to any of the preceding claims, wherein the food articles are in the form of a pellet, lentil, briquette, pebble, dragee, pillow, egg or ball.

8. The capsule according to claim 6, wherein the food articles have a height dimension of between 1 and 10mm, preferably 5mm.

9. The capsule according to any of the preceding claims, wherein the dehydrated food powder is selected from soup powders, sauce powders, mashed potato powders, chocolate powder, soluble beverage powders or milk powder.

10. The capsule according to any of the preceding claims, wherein the food pellets comprise fat in an amount of 5-65 wt%, starch in an amount of 1-10 wt%, gum in an amount of 1-5 wt%, flour in an amount of 10-30 wt%.

11. The capsule according to any of the preceding claims, wherein the food pellets comprise any of salt, sugar, flavours, emulsifiers, maltodextrin, whey protein powder, creamer, wheat gluten hydrolysate, or any combinations thereof.

12. The capsule according to any of the preceding claims, wherein each pellet has a density of 1.0 - 1.5 g/cm³.

13. The capsule according to any of the preceding claims, which comprises 5-15g of food pellets.

14. The capsule according to any of the preceding claims, which is a sealed capsule.

15. The capsule according to any of the preceding claims, designed to be extracted by injection of fluid under pressure in an extraction device.

16. The capsule according to any of the preceding claims, comprising a closed chamber containing said food articles and a means allowing said capsule to be opened at the time of its use and for allowing a beverage to flow out.

17. A use of a capsule according to any of claims 1 to 16 in the preparation of an instant food product.

18. The use according to claim 17, which comprises placing the capsule in a beverage system and allowing the contents of said capsule to be extracted.

19. The use according to claim 18, wherein the contents of the capsule are extracted with hot water.

20. The use according to claim 19, wherein the contents of the capsule are extracted with 100-200mL of hot water.

21. The use according to any of claim 17 to 20, wherein the food product is a soup, a sauce, mashed potatoes, beverage or savoury drink.

22. A method for the production of a capsule usable in a beverage dispensing machine according to any of claims 1 to 16, comprising the step of
a. preparing food pellets by mixing dehydrated ingredients with a fat-based binding system wherein a ratio of the dehydrated ingredients:fat-based binding system is between 50:50 to 90:10 and pressing or extruding the mixture to obtain said food articles and
b. filling the capsule usable in the beverage dispensing machine with a plurality of said food articles.

23. The method according to claim 22, wherein the pressing is carried out with any of flat die pelleting presses, gear-shaped press rollers, punch and die presses, roller presses.

24. The method according to any of claims 22 or 23, wherein the extruding is carried out with any of screen and basket extruders, radial, axial and dome extruders, flat and ring die extruders, axial screw extruders, hollow perforated cylinders.

25. A system for the production of an instant food product, comprising a machine and a capsule according to any of claims 1 to 16, wherein the machine comprises means to extract a capsule placed in said machine by injecting hot liquid in said capsule, and wherein the capsule comprises means for being extracted by said hot liquid and means for allowing an instant food product to flow out of said capsule.

26. A compacted food pellet comprising a dehydrated food powder mixed in a fat-based binding system wherein a ratio of the dehydrated food powder:fat-based binding system is between 50:50 to 90:10, and wherein the fat-based binding system comprises a mixture of fat, flour, starch and gum.

27. The food pellet according to claim 26, wherein the pellet has a surface to volume ratio of 0.9mm⁻¹ to 3.5 mm⁻¹.

## Patentansprüche

1. Kapsel, die in einen Getränkeautomaten einsetzbar ist, wobei die Kapsel eine Vielzahl von verdichteten Nahrungsmittelartikeln umfasst, die ein dehydriertes Nahrungsmittelpulver, das in ein fettbasiertes Bindesystem eingemischt ist, aufweisen, wobei ein Verhältnis dehydriertes Nahrungsmittelpulver:fettbasiertes Bindesystem zwischen 50:50 bis 90:10 liegt.

2. Kapsel gemäß Anspruch 1, wobei die Nahrungsmittelartikel ein Flächen-Volumen-Verhältnis von 0,9 bis 3,5 mm⁻¹ aufweisen.

3. Kapsel gemäß Anspruch 1 oder 2, wobei das Flächen-Volumen-Verhältnis der Nahrungsmittelartikel zwischen 0,9 - 3, 35 mm⁻¹ liegt, bevorzugter zwischen 0,95 - 3,33 mm⁻¹, besonders bevorzugt zwischen 1,3 - 2,1 mm⁻¹.

4. Kapsel gemäß einem der vorhergehenden Ansprüche, wobei das Bindesystem eine Mischung aus Fett, Mehl, Stärke und Gummi aufweist.

5. Kapsel gemäß einem der vorhergehenden Ansprüche, wobei das Bindesystem 30 - 40 Gewichtsprozent Fett, 40 - 50 Gewichtsprozent Mehl, 10 - 15 Gewichtsprozent Stärke und 5 - 10 Gewichtsprozent Gummi aufweist.

6. Kapsel gemäß einem der vorhergehenden Ansprüche, wobei das Bindesystem eine Mischung aus Palmfett, Weizenmehl, Kartoffelstärke und Guargummi aufweist.

7. Kapsel gemäß einem der vorhergehenden Ansprüche, wobei die Nahrungsmittelartikel in Form von Pellets, Linsen, Briketts, Kiesel, Dragees, Kissen, Eiern oder Kugeln vorliegen.

8. Kapsel gemäß Anspruch 6, wobei die Nahrungsmittelartikel eine Höhenabmessung von zwischen 1 und 10 mm, vorzugsweise 5 mm, aufweisen.

9. Kapsel gemäß einem der vorhergehenden Ansprüche, wobei das dehydrierte Nahrungsmittelpulver aus Suppenpulvern, Kartoffelbreipulvern, Schokoladenpulvern, lösbaren Getränkepulvern oder Milchpulver ausgewählt ist.

10. Kapsel gemäß einem der vorhergehenden Ansprüche, wobei die Nahrungsmittelpellets Fett in einer Menge von 5 - 65 Gewichtsprozent, Stärke in einer Menge von 1- 10 Gewichtsprozent, Gummi in einer Menge von 1 - 5 Gewichtsprozent und Mehl in einer Menge von 10 - 30 Gewichtsprozent aufweisen.

11. Kapsel gemäß einem der vorhergehenden Ansprüche, wobei die Nahrungsmittelpellets eine beliebige Komponente aus den Komponenten Salz, Zucker, Aromen, Emulgatoren, Maltodextrin, Molkeneiweißpulver, Getränkeweisser, Weizenglutenhydrolysat oder beliebigen Kombinationen daraus aufweisen.

12. Kapsel gemäß einem der vorhergehenden Ansprüche, wobei jedes Pellet eine Dichte von 1,0 - 1,5 g/cm³ aufweist.

13. Kapsel gemäß einem der vorhergehenden Ansprüche, die 5 - 15 g an Nahrungsmittelpellets aufweist.

14. Kapsel gemäß einem der vorhergehenden Ansprüche, wobei dies eine abgedichtete Kapsel ist.

15. Kapsel gemäß einem der vorhergehenden Ansprüche, die gestaltet ist, um durch Einleiten eines Fluids unter Druck in einer Extraktionsvorrichtung extrahiert zu werden.

16. Kapsel gemäß einem der vorhergehenden Ansprüche, die eine geschlossene Kammer aufweist, die die Nahrungsmittelartikel und ein Mittel enthält, das das Öffnen der Kapsel zum Zeitpunkt der Verwendung erlaubt und das das Herausfließen eines Getränks ermöglicht.

17. Verwendung einer Kapsel gemäß einem der Ansprüche 1 bis 16 bei der Zubereitung eines Fertiggerichts.

18. Verwendung gemäß Anspruch 17, die umfasst, dass die Kapsel in einem Getränkesystem positioniert ist und das Extrahieren der Kapselinhalte erlaubt.

19. Verwendung gemäß Anspruch 18, wobei die Kapselinhalte mit heißem Wasser extrahiert werden.

20. Verwendung gemäß Anspruch 19, wobei die Kapselinhalte mit 100 - 200 ml heißem Wasser extrahiert werden.

21. Verwendung gemäß einem der Ansprüche 17 bis 20, wobei das Nahrungsmittelprodukt eine Suppe, eine Sauce, Kartoffelbrei, ein Getränk oder ein würziges Getränk ist.

22. Verfahren zum Herstellen einer Kapsel, die in einem Getränkeautomaten verwendet werden kann, gemäß einem der Ansprüche 1 bis 16, das den Schritt umfasst
a) Zubereiten der Nahrungsmittelpellets durch Mischen der dehydrierten Zutaten mit einem fettbasierten Bindesystem, wobei ein Verhältnis dehydrierte Zutaten:fettbasiertes Bindesystem zwischen 50:50 bis 90:10 liegt und die Nahrungsmittelartikel durch Pressen oder Extrudieren der Mischung erhalten werden, und
b) Befüllen der Kapsel, die im Getränkeautomaten verwendbar ist, mit einer Vielzahl von Nahrungsmittelartikeln.

23. Verfahren gemäß Anspruch 22, wobei das Pressen durch eine Vorrichtung der Vorrichtungen Pellet-Flachpressen, zahnradförmige Pressrollen, Stanz- und Gesenkpressen und Rollenpressen durchgeführt wird.

24. Verfahren gemäß einem der Ansprüche 22 oder 23, wobei das Extrudieren mit einer Vorrichtung der Vorrichtungen Siebkorb-Extruder, radiale, axiale und Dome-Extruder, Flach- und Ringextruder, Axial-Schneckenextruder und hohlen Perforierzylinder durchgeführt wird.

25. System zur Herstellung eines Fertiggerichtprodukts, das aufweist eine Maschine und eine Kapsel gemäß einem der Ansprüche 1 bis 16, wobei die Maschine Mittel aufweist, um eine in der Maschine angeordnete Kapsel durch Einleiten von heißem Wasser in die Kapsel zu extrahieren, und wobei die Kapsel Mittel aufweist, um durch heiße Flüssigkeit extrahiert zu werden und Mittel, die das Herausfließen eines Fertiggerichtprodukts aus der Kapsel ermöglichen.

26. Verdichtetes Nahrungsmittelpellet, das ein dehydriertes Nahrungsmittelpulver enthält, das in einem fettbasierten Bindesystem eingemischt ist, wobei ein Verhältnis dehydriertes Nahrungsmittelpulver:fettbasiertes Bindesystem zwischen 50:50 bis 90:10 liegt, und wobei das fettbasierte Bindesystem eine Mischung aus Fett, Mehl, Stärke und Gummi aufweist.

27. Nahrungsmittelpellet gemäß Anspruch 26, wobei das Pellet ein Flächen-Volumen-Verhältnis von 0,9 mm⁻¹ bis 3,5 mm⁻¹ aufweist.

## Revendications

1. Une capsule utilisable dans une machine de distribution de boisson, la capsule comprenant une pluralité d'articles alimentaires compactés comprenant une poudre alimentaire déshydratée mélangée dans un système de liaison à base de matière grasse, dans laquelle le rapport de la poudre alimentaire déshydratée sur le système de liaison à base de matière grasse est compris entre 50:50 et 90:10.

2. La capsule selon la revendication 1, dans laquelle les articles alimentaires ont un rapport surface sur volume compris entre 0,9 et 3,5 mm⁻¹.

3. La capsule selon la revendication 1 ou 2, dans laquelle le rapport surface sur volume des articles alimentaires est entre 0,9-3,35 mm⁻¹, plus préférablement entre 0,95-3,33 mm⁻¹, encore plus préférablement entre 1,3-2,1 mm⁻¹.

4. La capsule selon l'une quelconque des revendications précédentes, dans laquelle le système de liaison comprend un mélange de matière grasse, farine, amidon et gomme.

5. La capsule selon l'une quelconque des revendications précédentes, dans laquelle le système de liaison comprend 30-40 % en poids de matière grasse, 40-50 % en poids de farine, 10-15 % en poids d'amidon et 5-10 % en poids de gomme.

6. La capsule selon l'une quelconque des revendications précédentes, dans laquelle le système de liaison comprend un mélange de graisse de palme, de farine de blé, d'amidon de pomme de terre et de gomme de guar.

7. La capsule selon l'une quelconque des revendications précédentes, dans laquelle les articles alimentaires sont sous la forme d'une pastille, d'une lentille, d'une briquette ou comprimé, d'un galet ou caillou, d'une dragée, d'un coussin, d'un oeuf ou d'un ballon.

8. La capsule selon la revendication 6, dans laquelle les articles alimentaires ont une dimension en hauteur comprise entre 1 et 10 mm, de préférence 5 mm.

9. La capsule selon l'une quelconque des revendications précédentes, dans laquelle la poudre alimentaire déshydratée est sélectionnée parmi les soupes en poudre, poudres sauce, purée de pommes de terre en poudre, chocolat en poudre, poudres pour boisson soluble ou poudre de lait.

10. La capsule selon l'une quelconque des revendications précédentes, dans laquelle les pastilles alimentaires comprennent de la matière grasse dans une quantité de 5-65 % en poids, de l'amidon dans une quantité de 1-10 % en poids, de la gomme dans une quantité de 1-5 % en poids, de la farine dans une quantité de 10-30 % en poids.

11. La capsule selon l'une quelconque des revendications précédentes, dans laquelle les pastilles alimentaires comprennent n'importe quel élément parmi le sel, sucre, arômes, émulsifiants, maltodextrine, poudre de protéine de lactosérum, crème, hydrolysat de gluten de blé, ou toute combinaison de ceux-ci.

12. La capsule selon l'une quelconque des revendications précédentes, dans laquelle chaque pastille a une densité de 1,0 - 1,5 g/cm³.

13. La capsule selon l'une quelconque des revendications précédentes, qui comprend 5-15g de pastilles alimentaires.

14. La capsule selon l'une quelconque des revendications précédentes, qui est une capsule scellée.

15. La capsule selon l'une quelconque des revendications précédentes, conçue pour être extraite par injection de fluide sous pression dans un dispositif d'extraction.

16. La capsule selon l'une quelconque des revendications précédentes, comprenant une chambre fermée contenant lesdits articles alimentaires et un moyen permettant à ladite capsule d'être ouverte au moment de son utilisation et pour permettre à une boisson de s'écouler.

17. Une utilisation d'une capsule selon l'une quelconque des revendications 1 à 16 dans la préparation d'un produit alimentaire instantané.

18. L'utilisation selon la revendication 17, qui comprend le fait de placer la capsule dans un système de boisson et de permettre aux contenus de ladite capsule d'être extraits.

19. L'utilisation selon la revendication 18, dans laquelle les contenus de la capsule sont extraits avec de l'eau chaude.

20. L'utilisation selon la revendication 19, dans laquelle les contenus de la capsule sont extraits avec 100-200 ml d'eau chaude.

21. L'utilisation selon l'une quelconque des revendications 17 à 20, dans laquelle le produit alimentaire est une soupe, une sauce, des pommes de terre en purée, une boisson ou une boisson savoureuse ou salée.

22. Un procédé pour la production d'une capsule utilisable dans une machine de distribution de boisson selon l'une des revendications 1 à 16, comprenant l'étape consistant à
a. préparer des pastilles alimentaires en mélangeant des ingrédients déshydratés avec un système de liaison à base de matière grasse, le rapport des ingrédients déshydratés sur le système de liaison à base de matière grasse est compris entre 50:50 et 90:10 et en pressant ou extrudant le mélange pour obtenir lesdits articles alimentaires et
b. remplir la capsule utilisable dans la machine de distribution de boisson avec une pluralité desdits articles alimentaires.

23. Le procédé selon la revendication 22, dans lequel la pression est effectuée avec n'importe quel élément parmi les presses ou pastilleuses à filière plates, les rouleaux presseurs à outil-pignon ou en forme de roue, les presses à poinçon et matrice, les presses à rouleaux.

24. Le procédé selon l'une quelconque des revendications 22 ou 23, dans lequel l'extrusion est réalisée avec n'importe quel élément parmi les extrudeuses à tamis ou treillis ou pressoirs, les extrudeuses radiales, axiales et à dôme, les extrudeuses à filière plates et à bague, les extrudeuses à vis axiale, les cylindres perforés creux.

25. Un système pour la production d'un produit alimentaire instantané, comprenant une machine et une capsule selon l'une quelconque des revendications 1 à 16, dans lequel la machine comprend des moyens pour extraire une capsule placée dans ladite machine par injection de liquide chaud dans ladite capsule, et dans lequel la capsule comprend des moyens pour être extraite par ledit liquide chaud et des moyens pour permettre à un produit alimentaire instantané de s'écouler de ladite capsule.

26. Une pastille alimentaire compactée comprenant une poudre alimentaire déshydratée mélangée dans un système de liaison à base de matière grasse, dans laquelle le rapport de la poudre alimentaire déshydratée sur le système de liaison à base de matière grasse est compris entre 50:50 et 90:10, et dans laquelle le système de liaison à base de matière grasse comprend un mélange de matière grasse, farine, amidon et gomme.

27. La pastille alimentaire selon la revendication 26, la pastille ayant un rapport surface sur volume de 0,9 mm⁻¹ à 3,5 mm⁻¹.
